# EUROPÄISCHE PATENTANMELDUNG

(11) **EP 4 707 078 A1**
(43) Veröffentlichungstag der Anmeldung: **11.03.2026**
(21) Anmeldenummer: 24198608.2
(22) Anmeldetag: 05.09.2024
(51) Int. Cl.: B60R 19/34

(54) **STOSSFÄNGERANORDNUNG FÜR EIN KRAFTFAHRZEUG**

(71) Anmelder: Benteler Automobiltechnik GmbH, 33102 Paderborn (DE); HOLON GmbH, 33102 Paderborn (DE)
(72) Erfinder: Dinius, Waldemar, 33098 Paderborn (DE); Tatarinov, Konstantin, 33602 Bielefeld (DE)
(74) Vertreter: Ksoll, Peter

(57) **Zusammenfassung**

Stoßfängeranordnung (1) für ein Kraftfahrzeug aufweisend einen Querträger (2) sowie jeweils eine im Bereich der Enden (3) des Querträgers (2) angeordnete Crashbox (4) zur Kopplung der Stoßfängeranordnung (1) mit einem Längsträger (21) des Kraftfahrzeugs, wobei die Crashbox (4) ein in Kraftfahrzeugvertikalrichtung (Z) extrudiertes Profil aufweist. Die Crashbox (4) weist einen ersten in Kraftfahrzeugvertikalrichtung (Z) verlaufenden Kopplungskanal (10, 11) auf, wobei ein Kopplungsmittel (13) wenigstens abschnittsweise in den ersten Kopplungskanal (10, 11) eingreift und die Crashbox (4) mit dem Querträger (2) verbindet, wobei die Crashbox (4) an ihrem vom Querträger (2) abgewandten Ende (22) einen zweiten in Kraftfahrzeugvertikalrichtung (Z) verlaufenden Kopplungskanal (12) zur Verbindung der Crashbox (4) mit dem Längsträger (21) aufweist.

## Beschreibung

Die vorliegende Erfindung betrifft eine Stoßfängeranordnung für ein Kraftfahrzeug gemäß den Merkmalen im Oberbegriff von Anspruch 1.

Aus dem Stand der Technik ist es bekannt, Kraftfahrzeuge front- oder endseitig mit Stoßfängeranordnungen auszustatten. Diese weisen üblicherweise einen Querträger auf, der sich annähernd über die gesamte Kraftfahrzeugbreite erstreckt. Der Querträger selbst ist über Crashboxen mit der Karosserie und/oder mit Längsträgern des Kraftfahrzeugs gekoppelt. Im Falle eines Aufpralls wird die Bewegungsenergie durch die Crashboxen in Deformationsenergie umgewandelt.

Die Crashboxen können mittels Extrusion hergestellt werden, so dass diese ein extrudiertes Profil aufweisen, welches aus mehreren Hohlkammern ausgebildet ist. Insbesondere ist das Profil in Kraftfahrzeugvertikalrichtung extrudiert.

Eine entsprechende Stoßfängeranordnung ist beispielsweise aus der JP 201151360 A bekannt. In der hier offenbarten Stoßfängeranordnung sind die Crashboxen mit dem Querträger verschweißt. Dabei handelt es sich um eine gängige Kopplungsmethode zwischen Crashbox und Querträger. Diese hat jedoch den Nachteil, dass ein energieaufwendiges Schweißverfahren für die Herstellung der Stoßfängeranordnung erforderlich ist. Sind die Crashboxen mit dem Querträger schweißtechnisch verbunden, ist ein Lösen der Bauteile nur schwer möglich. Insbesondere wenn der Querträger im Querschnitt U-förmig oder hutförmig ausgebildet ist und somit eine zum Kraftfahrzeuginneren orientierte Öffnung entlang seiner Längsrichtung aufweist, gestaltet sich eine schweißtechnische Anbindung der Crashboxen an den Querträger oftmals aufwendig.

Hiervon ausgehend ist die Aufgabe der vorliegenden Erfindung eine alternative Kopplungsmöglichkeit zwischen Crashbox und Querträger aufzuzeigen.

Gelöst wird diese Aufgabe durch eine Stoßfängeranordnung für ein Kraftfahrzeug gemäß den Merkmalen im Anspruch 1.

Vorteilhafte Ausführungsformen der Erfindung sind Gegenstand der abhängigen Ansprüche.

Die erfindungsgemäße Stoßfängeranordnung für ein Kraftfahrzeug weist einen Querträger sowie jeweils eine im Bereich der Enden des Querträgers angeordnete Crashbox bzw. ein Deformationsprofil zur Kopplung der Stoßfängeranordnung mit einem Längsträger des Kraftfahrzeugs auf. Die Stoßfängeranordnung kann vorderseitig oder rückseitig am Kraftfahrzeug angeordnet werden.

Insbesondere weist der Querträger einen Steg und zwei mit dem Steg verbundene und gegenüberliegende Schenkel auf. Bevorzugt ist der Querträger aus einem in Kraftfahrzeugquerrichtung extrudierten Strangpressprofil ausgebildet. Besonders bevorzugt ist der Querträger im Querschnitt zumindest abschnittsweise hutförmig oder U-förmig ausgebildet. Bei der hutförmigen Ausbildung des Querträgers wird die Oberseite des Huts durch den Steg ausgebildet, während die zwei gegenüberliegenden Schenkel die Seitenwände des Huts darstellen. Die gegenüberliegenden Schenkel weisen zudem an ihren dem Steg abgewandten Enden jeweils einen Flansch auf, der die Krempe des Huts ausbildet. Bei der U-förmigen Ausgestaltung des Querträgers bilden die gegenüberliegenden Schenkel die im Wesentlichen parallel verlaufenden Schenkel des U's aus, während der Steg die gegenüberliegenden Schenkel verbindet. Sowohl die hutförmigen als auch die U-förmigen Querträger weisen somit jeweils eine offene Seite entlang ihrer Längsrichtung auf. Besonders bevorzugt ist der Querträger so im Kraftfahrzeug angeordnet, dass die offene Seite zu den Crashboxen orientiert ist.

Die Crashbox weist ein in Kraftfahrzeugvertikalrichtung extrudiertes Profil auf. Insbesondere ist die Crashbox stranggepresst. Dies ermöglicht eine kostengünstige Herstellung der Crashboxen.

Die erfindungsgemäße Stoßfängeranordnung zeichnet sich nunmehr dadurch aus, dass die Crashbox einen ersten in Kraftfahrzeugvertikalrichtung verlaufenden Kopplungskanal aufweist. Ein Kopplungsmittel greift zumindest abschnittsweise in den ersten Kopplungskanal ein und verbindet die Crashbox mit dem Querträger. Das Kopplungsmittel kann den Kopplungskanal auch vollständig durchgreifen. Bevorzugt weist die Crashbox zwei erste Kopplungskanäle auf, in die jeweils zumindest abschnittsweise ein Kopplungsmittel eingreift und so die Crashbox mit dem Querträger verbinden. Die erfindungsgemäße Kopplung zwischen der Crashbox und dem Querträger hat den Vorteil, dass eine stoffschlüssige und insbesondere schweißtechnische Verbindung zwischen Querträger und Crashbox nicht mehr erforderlich ist. Es können Produktionskosten eingespart werden.

Erfindungswesentlich ist weiterhin, dass die Crashbox an ihrem vom Querträger abgewandten Ende einen zweiten in Kraftfahrzeugvertikalrichtung verlaufenden Kopplungskanal zur Verbindung der Crashbox mit dem Längsträger des Kraftfahrzeugs aufweist. Somit kann eine stoffschlüssige und insbesondere schweißtechnische Verbindung auch zwischen Crashbox und Längsträger vermieden werden. Es können auch hier Produktionskosten eingespart werden.

Die erfindungsgemäße Stoßfängeranordnung kann auch zwei Längsträger umfassen.

Der Querträger kann entlang seiner Längsrichtung und insbesondere zwischen seinen Endbereichen, mithin zwischen den Kopplungsbereichen von Querträger und Crashboxen, ein Mehrkammerhohlprofil, bevorzugt ein Zweikammerhohlprofil aufweisen. Dabei ist es besonders vorteilhaft, wenn die zwei Hohlprofilkammern in Kraftfahrzeugvertikalrichtung übereinander angeordnet sind. So kann bei geringer Gewichtszunahme die Stabilität bzw. Steifigkeit des Querträgers erhöht werden.

Es hat sich ferner als vorteilhaft herausgestellt, wenn der Steg des Querträgers eine sich in Längsrichtung des Stegs erstreckende Sicke aufweist. Die Sicke ist bevorzugt in Richtung der Crashboxen orientiert. Dies erhöht insbesondere die Knicksteifigkeit des zu einer Seite offenen Querträgers.

Bevorzugt ist die Crashbox abschnittsweise zwischen den gegenüberliegenden Schenkeln des Querträgers angeordnet und steht mit dem Steg und/oder der Sicke des Stegs in Kontakt. Durch den direkten Kontakt zwischen der Crashbox und dem Steg bzw. der Sicke des Stegs ist ein durchgängiger Lastpfad ausgebildet. Im Crashfall ermöglicht dies eine direkte Lasteinleitung von dem Querträger in die Crashboxen.

Insbesondere weist die Crashbox in Kraftfahrzeuglängsrichtung einen trapezförmigen Verlauf auf. Besonders bevorzugt nimmt dabei die Breite der Crashbox zum Querträger hin zu. Dies hat sich im Rahmen der Erfindung als vorteilhaft für das Deformationsverhalten der Crashbox herausgestellt. Auch eine Abnahme der Breite der Crashbox zum Querträger hin ist jedoch möglich.

Die Crashbox weist bevorzugt vier Außenwände auf, die einen Deformationsbereich einschließen. Der Deformationsbereich selbst ist durch Innenwände ausgebildet, wobei auch die Außenwände zum Deformationsbereich zugehörend angesehen werden können. Die Innenwände können sich zwischen den Außenwänden und insbesondere zwischen den Ecken der Außenwände erstrecken. Besonders bevorzugt sind die Innenwände von der Kraftfahrzeugvertikalrichtung aus betrachtet X-förmig angeordnet. Der Deformationsbereich weist in dieser Ausführungsform vier Hohlräume auf. Die X-förmige Anordnung der Innenwände hat sich im Rahmen der Erfindung als vorteilhaft für das Deformationsverhalten der Crashbox herausgestellt und führt zu einer gleichmäßigen Stauchung der Crashbox in Kraftfahrzeuglängsrichtung.

Weiterhin hat sich als vorteilhaft herausgestellt, wenn die X-förmig angeordneten Innenwände jeweils wenigstens eine in Kraftfahrzeugvertikalrichtung verlaufende Sicke oder Abwinklung aufweisen. Dabei sind die Sicken bzw. Abwinklungen bevorzugt so an den vier Innenwänden angeordnet, dass sie aus der Kraftfahrzeugvertikalrichtung betrachtet bezogen auf einen Kontaktpunkt der Innenwände gleichsinnig ausgestellt sind. Die Sicken bzw. Abwinklungen stellen somit einen Trigger dar, der im Crashfall dafür sorgt, dass sich die Innenwände nicht gegenseitig behindern.

Vorzugsweise weist wenigstens eine der in Kraftfahrzeuglängsrichtung orientierten Außenwände eine in Kraftfahrzeugvertikalrichtung verlaufende Sicke und/oder Kerbe auf. Bei der Sicke handelt es sich insbesondere um eine zum Deformationsbereich orientierte Einbuchtung der Außenwand, wobei die Einbuchtung durch eine Verformung der Seitenwand ausgebildet sein kann. Bei der Kerbe handelt es sich um eine Ausnehmung in der Außenwand, wobei diese sowohl außenseitig als auch zum Deformationsbereich weisend ausgebildet sein kann. Die Außenwände können mehrere Sicken oder mehrere Kerben oder Kombinationen derselben aufweisen. Durch die Sicken bzw. Kerben ist sichergestellt, dass die in Kraftfahrzeuglängsrichtung orientierten Außenwände im Crashfall in Richtung des Deformationsbereichs einknicken bzw. verlagert werden.

Bevorzugt sind die Kopplungskanäle durch die Extrusion der Crashbox ausgebildet. Dies hat den Vorteil, dass keine zusätzlichen Herstellungsschritte für die Ausbildung der Kopplungskanäle erforderlich sind. Alternativ können die Kopplungskanäle jedoch auch durch eine Bohrung in der Crashbox ausgebildet sein. Eine weitere Alternative besteht darin, dass die Kopplungskanäle innerhalb von Hülsen ausgebildet sind, wobei die Hülsen ebenfalls durch die Extrusion der Crashbox ausgebildet oder mit der Crashbox verbunden sein können.

Die erfindungsgemäßen Koppelkanäle könnten auch als Vollmaterial in Form von runden oder mehreckigen Vollmaterialabschnitten mit der Crashbox mitextrudiert und erst durch Durchbohren und/oder längenabschnittsweises Gewindeschneiden fertiggestellt sein. An der fertig hergestellten Crashbox ist dadurch der Kopplungskanal durchgängig über die gesamte Länge hohl bzw. hülsenartig, oder mit zwei gegenüberliegenden Sacklöchern ausgebildet.

Insbesondere sind die Kopplungskanäle im Querschnitt geschlossen. Die Kopplungskanäle können jedoch auch im Querschnitt halbmondförmig ausgeformt sein. Letzteres hat sich als vorteilhaft für die Extrusion der Crashbox herausgestellt. Bei dem Kopplungsmittel handelt es sich insbesondere um einen Bolzen, einen Stift, eine Gewindestange oder eine Schraube.

Vorzugsweise durchgreift das Kopplungsmittel neben dem Kopplungskanal auch die gegenüberliegenden Schenkel des Querträgers oder des Längsträgers. In diesem Fall ist das Kopplungsmittel jeweils auf der vom Kopplungskanal abgewandten Seite der Schenkel fixiert, beispielsweise durch eine Mutter. So ist die Crashbox über das Kopplungsmittel sicher mit dem Querträger und/oder dem Längsträger verbunden. Alternativ kann das Kopplungsmittel direkt mit dem Querträger und/oder dem Längsträger gefügt sein, beispielsweise durch eine Schweißverbindung.

Alternativ kann in den Kopplungskanal ein Gewinde eingeschnitten sein. In diesem Fall ist es möglich, dass zwei Kopplungsmittel, insbesondere zwei Schrauben, abschnittsweise in den Kopplungskanal eingreifen. Die Schrauben durchgreifen jeweils einen der Schenkel und greifen in das Gewinde des Kopplungskanals ein.

Vorzugsweise ist der wenigstens eine zweite Kopplungskanal innerhalb einer Hülse ausgebildet und die Hülse mittels eines Stegs mit der Crashbox verbunden. Dies hat den Vorteil, dass die Verbindung zwischen Crashbox und Längsträger durch das Kopplungsmittel nicht direkt an dem zum Crashbox orientierten Ende des Längsträgers ausgebildet sein muss. Je nach Länge des Stegs kann der Abstand zwischen dem Kopplungsabschnitt und der Stirnseite der Crashbox erhöht werden. Dies ermöglicht eine sichere Kopplung zwischen Crashbox und Längsträger und vergrößert die für die Befestigung des Kopplungsmittels erforderliche Fläche. Beispielsweise für das Anschrauben einer Mutter.

Besonders bevorzugt ist die Höhe des zweiten Kopplungskanals in Kraftfahrzeugvertikalrichtung geringer als die Höhe der Crashbox in Kraftfahrzeugvertikalrichtung. So kann der Längsträger mit der zum Längsträger orientierten Stirnseite der Crashbox in direktem Kontakt stehen. Dies ermöglicht die Ausbildung eines durchgängigen Lastpfads, sodass im Crashfall die nach der Deformation der Crashbox verbleibende Energie an die Längsträger weitergeleitet werden kann. Durch den direkten Kontakt zwischen dem Längsträger und der Crashbox wird das die Crashbox mit dem Längsträger verbindende Kopplungsmittel weniger belastet.

Weitere Vorteile, Merkmale und Eigenschaften der Erfindung sind Gegenstand der nachfolgenden Beschreibung. Die Figuren sind rein schematisch zu verstehen und sind nicht maßstabsgetreu. Es zeigen:
- Figur 1: eine erfindungsgemäße Stoßfängeranordnung in einer Perspektive,
- Figur 2a - d: mögliche Ausgestaltungen eines Querträgers im Querschnitt,
- Figur 3: eine erfindungsgemäße Crashbox in einer Perspektive,
- Figur 4: einen erfindungsgemäßen Querträger ohne Crashboxen in einer Perspektive,
- Figur 5a,b: einen erfindungsgemäßen Querträger ohne Crashboxen in einer Perspektive sowie im Schnitt A-A,
- Figur 6: eine erfindungsgemäße Crashbox mit einem Längsträger in einer Perspektive,
- Figur 7a,b: zwei Ausführungsformen einer erfindungsgemäßen Kopplung der Crashbox mit einem Querträger und einem Längsträger in einem Querschnitt,
- Figur 8a - c: mögliche Ausgestaltungen der Crashbox in einer Draufsicht und
- Figur 9: eine erfindungsgemäße Stoßfängeranordnung in einem deformierten Zustand in einer Draufsicht.

Für gleiche oder einander entsprechende Bauteile werden dieselben Bezugszeichen verwendet, auch wenn eine wiederholte Beschreibung aus Vereinfachungsgründen entfällt.

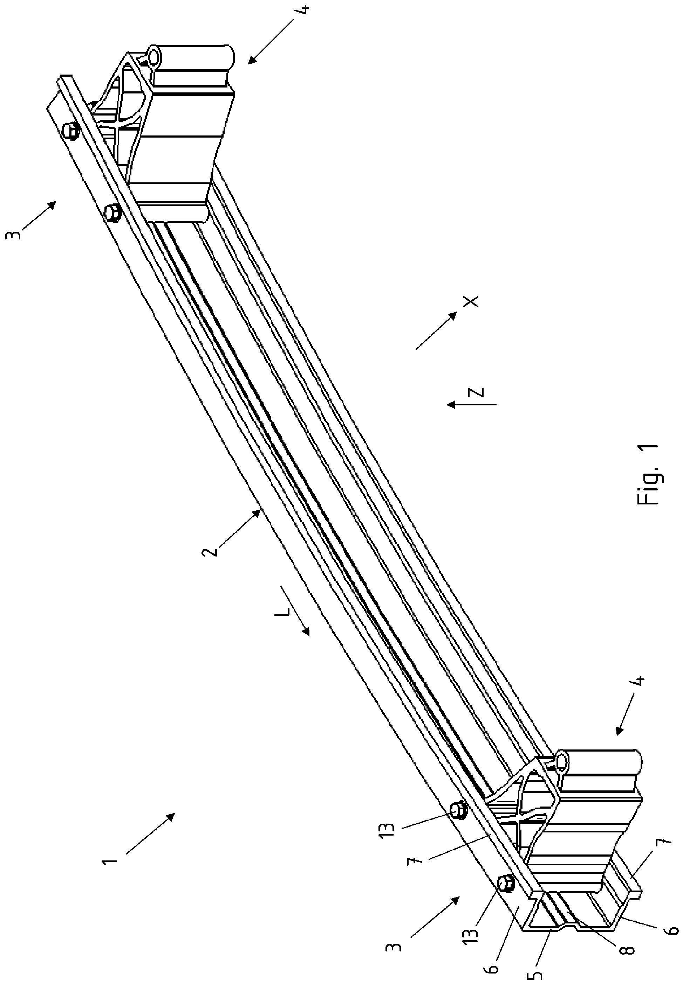

Die Figur 1 zeigt eine erfindungsgemäße Stoßfängeranordnung 1 für ein nicht näher dargestelltes Kraftfahrzeug, aufweisend einen Querträger 2 sowie jeweils eine im Bereich der Enden 3 des Querträgers 2 angeordnete Crashbox 4 zur Kopplung der Stoßfängeranordnung 1 mit dem Kraftfahrzeug.

Der Querträger 2 weist einen Steg 5 und zwei mit dem Steg 5 verbundene und einander gegenüberliegende Schenkel 6 auf. Im Querschnitt ist der Querträger 2 hutförmig ausgebildet. Der Steg 5 bildet den oberen Bereich des Huts aus, während die Schenkel 6 die Seitenwände des Huts darstellen. An den vom Steg 5 abgewandten Enden der Schenkel 6 ist jeweils ein Flansch 7 ausgebildet, der orthogonal zu dem jeweiligen Schenkel 6 nach außen absteht. Die Flansche 7 bilden die Krempe des Huts aus. Der Querträger 2 weist entlang seiner Längsrichtung L eine offene Seite auf, welche in Kraftfahrzeuglängsrichtung X ins Innere des Kraftfahrzeugs orientiert ist.

In Längsrichtung L des Stegs 5 erstreckt sich eine Sicke 8. Die Sicke 8 sorgt für eine erhöhte Knicksteifigkeit des offenen Querträgers 2.

Die Crashboxen 4 sind abschnittsweise zwischen den gegenüberliegenden Schenkeln 6 des Querträgers 2 angeordnet und stehen mit der Sicke 8 des Stegs 5 in Kontakt. Durch den direkten Kontakt zwischen der Sicke 8 und den Crashboxen 4 ergibt sich ein Lastpfad, so dass im Crashfall die auftretenden Kräfte direkt von dem Querträger 2 auf die Crashboxen 4 weitergeleitet werden können.

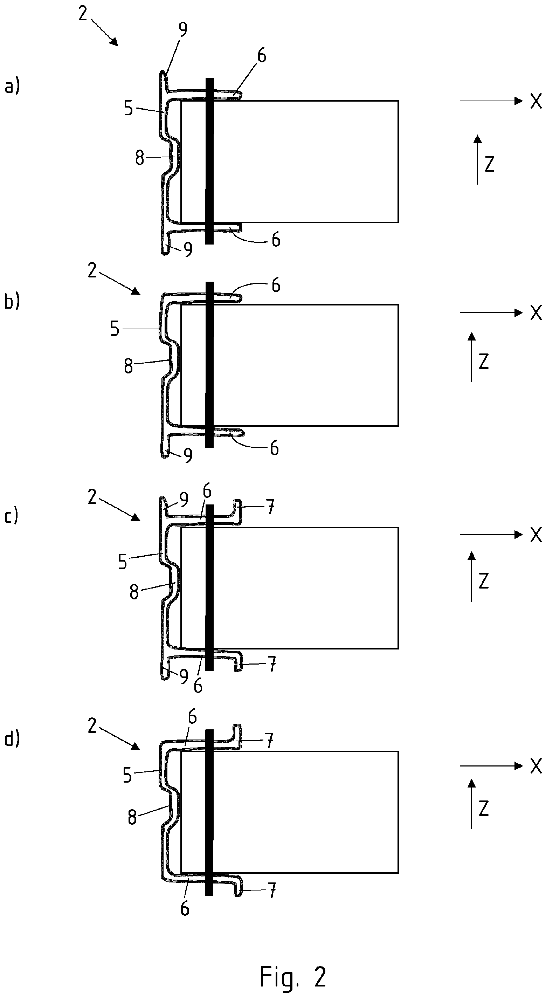

Die Figur 2 zeigt alternative Ausführungsvarianten des Querträgers 2 in einem Querschnitt. Die Figuren 2a und 2b zeigen jeweils eine U-förmige Konfiguration.

Der in der Figur 2a gezeigte Querträger 2 weist an den Übergangsabschnitten zwischen Steg 5 und Schenkel 6 jeweils einen nach außen abstehenden Flansch 9 auf. Diese bilden eine über den Schenkel 6 hinausgehende Verlängerung des Stegs 5 aus.

Die in der Figur 2b gezeigte Ausführungsvariante zeigt ebenfalls einen entsprechenden Schenkel 6, dieser ist jedoch nur an einer Seite des Stegs 5 ausgebildet.

Die Figuren 2c und 2d zeigen jeweils ein hutförmiges Profil des Querträgers 2. Wie auch in der in Figur 1 gezeigten Ausführungsform des Querträgers 2 weisen die Schenkel 6 in dieser Ausführungsvariante an ihrem vom Steg 5 abgewandten Ende nach außen abgewinkelte Flansche 7 auf. Die Flansche 7 sind orthogonal zu den Schenkeln 6 ausgerichtet und verlaufen parallel zum Steg 5 des Querträgers 2.

Die in der Figur 2c gezeigte Ausbildungsalternative weist ebenfalls jeweils im Übergangsbereich zwischen Steg 5 und Schenkel 6 angeordnete und nach außen überstehende Flansche 9 analog zur in der Figur 2a gezeigten Ausführungsvariante auf.

Die Figur 2d zeigt keine entsprechenden Flansche 9. Die hier gezeigte hutförmige Ausbildung des Querträgers 2 entspricht der in Figur 1 gezeigten Ausführungsvariante.

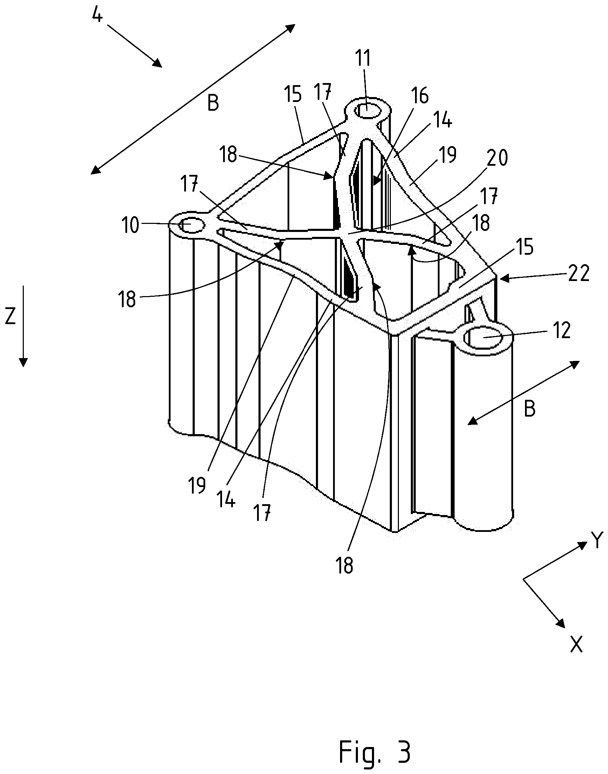

Die längsträgerseitige Kopplung der Crashbox 4 ist in der Figur 2 nicht gezeigt, kann aber analog zu den in den Figuren 3, 6, 7 und 8 aufgezeigten Kopplungsmitteln erfolgen.

Die Figur 3 zeigt die Crashbox 4 in einer Perspektive. Erfindungsgemäß weist die Crashbox 4 ein in Kraftfahrzeugvertikalrichtung Z extrudiertes Profil auf. Das Profil ist mittels Strangpressen hergestellt.

Die Crashbox 4 weist insgesamt drei in Kraftfahrzeugvertikalrichtung Z verlaufende Kopplungskanäle 10, 11, 12 auf. Die Kopplungskanäle 10, 11, 12 sind durch die Extrusion der Crashbox 4 ausgebildet. Figur 1 zeigt, dass die Kopplungskanäle 10 und 11 jeweils von einem Kopplungsmittel 13 durchgriffen sind, welche die Crashbox 4 mit dem Querträger 2 verbinden. Die erfindungsgemäße Verbindung zwischen dem Querträger 2 und den Crashboxen 4 hat den Vorteil, dass keine schweißtechnische Verbindung zwischen den Bauteilen erforderlich ist. Dies spart Kosten während der Herstellung der Stoßfängeranordnung 1. Eine Schweißverbindung wäre bei einer abschnittsweisen Anordnung der Crashboxen 4 zwischen den gegenüberliegenden Schenkeln 6 des Querträgers 2 zudem nur schwer zu realisieren.

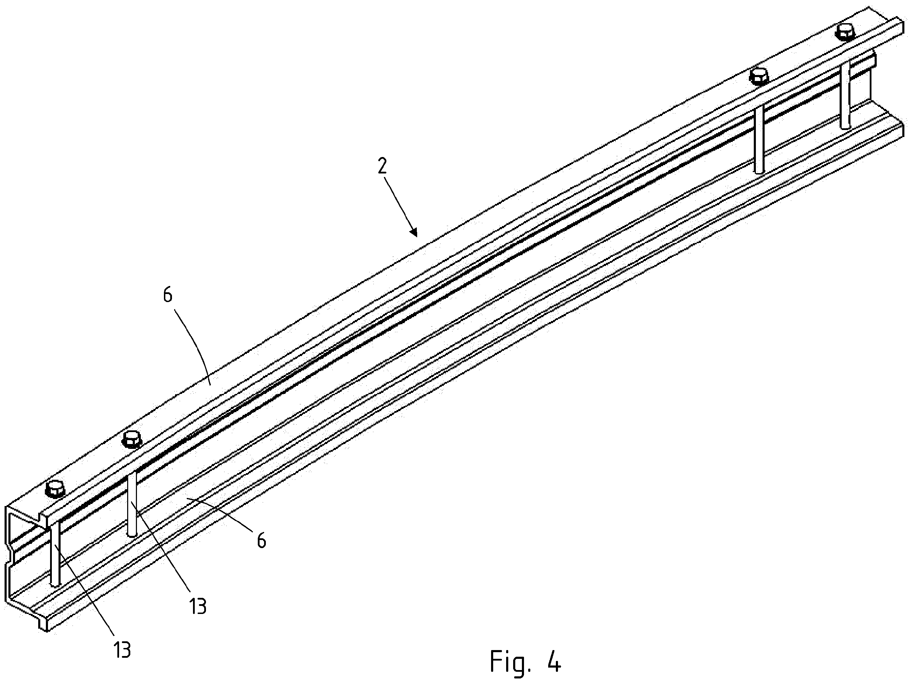

Die Kopplungsmittel 13 sind der Übersichtlichkeit halber nochmals ohne die Crashboxen 4 zusammen mit dem Querträger 2 in der Figur 4 dargestellt. Bei den Kopplungsmitteln 13 handelt es sich um Bolzen, welche ein endseitiges Gewinde aufweisen, sodass sie mittels einer Mutter fixiert werden können. Die Kopplungsmittel 13 durchgreifen die gegenüberliegenden Schenkel 6 des Querträgers 2 und ermöglichen so eine sichere Verbindung zwischen den Crashboxen 4 und dem Querträger 2.

Die Figur 3 zeigt, dass die Crashbox 4 zwei in Kraftfahrzeuglängsrichtung X orientierte Außenwände 14 und zwei in Kraftfahrzeugquerrichtung Y orientierte Außenwände 15 aufweist. Die vier Außenwände 14, 15 schließen einen Deformationsbereich 16 ein, der aus Innenwänden 17 ausgebildet ist. Die Außenwände 14, 15 gehören selbst auch zum Deformationsbereich. Die Innenwände 17 sind von der Kraftfahrzeugvertikalrichtung Z aus betrachtet, X-förmig angeordnet. Die Innenwände 17 erstrecken sich dabei jeweils von den zwischen den Außenwänden 14, 15 ausgebildeten Eckbereichen zur Mitte des Deformationsbereichs 16, wo sich die vier Innenwände 17 treffen. Der Deformationsbereich 16 weist vier durch die Innenwände 17 voneinander getrennte Hohlräume auf.

Die Innenwände 17 weisen in ihrem mittleren Bereich jeweils eine Abwinklung 18 auf. Die Abwinklungen 18 verlaufen dabei ebenfalls in Kraftfahrzeugvertikalrichtung Z und sind so ausgerichtet, dass sie von der Kraftfahrzeugvertikalrichtung Z aus betrachtet bezogen auf den Verbindungspunkt 20 der Innenwände 17 gleichsinnig ausgestellt sind. Entsprechend ausgebildete Abwinklungen 18 haben sich im Rahmen der Erfindung als vorteilhaft für das Deformationsverhalten der Crashboxen 4 herausgestellt. Die Innenwände 17 knicken im Deformationsfall gleichmäßig zusammen und behindern sich nicht gegenseitig.

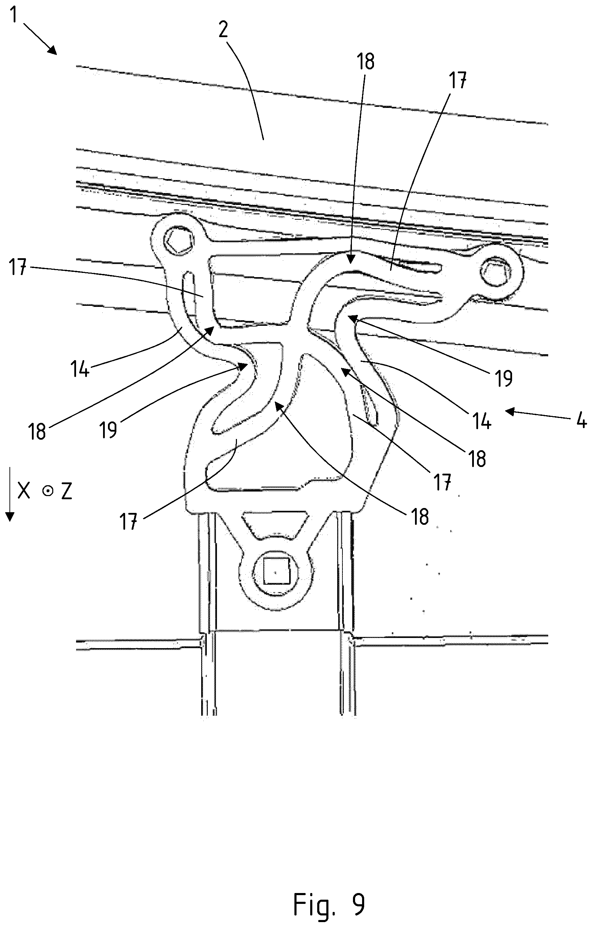

Die in Kraftfahrzeuglängsrichtung X orientierten Außenwände 14 weisen jeweils eine in Kraftfahrzeugvertikalrichtung Z verlaufende Sicke 19 auf. Die Sicken 19 sind zum Deformationsbereich 16 der Crashbox 4 hin orientiert. Im Crashfall wird durch die Sicken 19 sichergestellt, dass die Außenwände 14 bei der Deformation der Crashbox 4 nach innen in Richtung des Deformationsbereichs 16 gedrückt werden. Das Deformationsverhalten der Crashbox 4 ist in Figur 9 gezeigt.

Die Crashbox 4 weist in Kraftfahrzeuglängsrichtung X einen trapezförmigen Verlauf auf. Die Breite B der Crashbox 4 nimmt zum Querträger 2 hin, zu. Ein entsprechender Verlauf hat sich im Rahmen der Erfindung als vorteilhaft für die Deformation der Crashbox 4 herausgestellt.

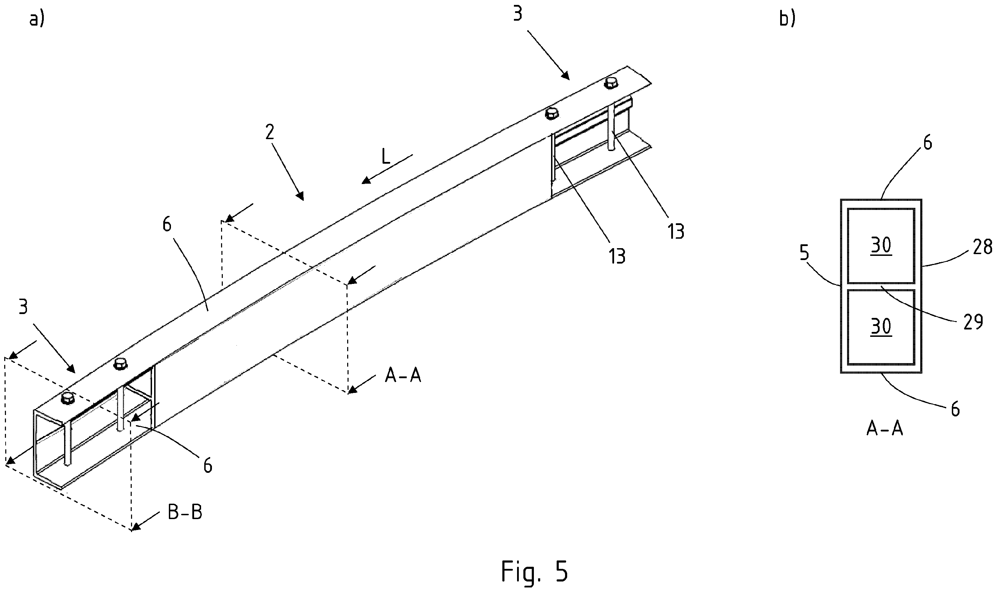

In Figur 5 ist eine alternative Ausführungsform des Querträgers 2 ohne Crashboxen 4 dargestellt. Figur 5a zeigt den Querträger 2 in einer Perspektive. Zwischen den Endbereichen 3 weist der Querträger 2 entlang seiner Längsrichtung L ein extrudiertes Zweikammerhohlprofil auf. Figur 5b zeigt den Querschnitt des Querträgers 2 im Schnitt A-A der Figur 5a. Zwischen den Endbereichen 3 weist der Querträger eine zum Inneren des Kraftfahrzeugs orientierte Abdeckung 28 auf, welche die Öffnung des Querträgers 2 verdeckt. Zwischen den gegenüberliegenden Schenkeln 6 ist ein Trennsteg 29 angeordnet, durch den zwei Hohlprofilkammern 30 ausgebildet sind. Das zwischen den Endbereichen 3 ausgebildete Zweikammerhohlprofil erhöht die Stabilität bzw. Steifigkeit des Querträgers 2 vorteilhaft.

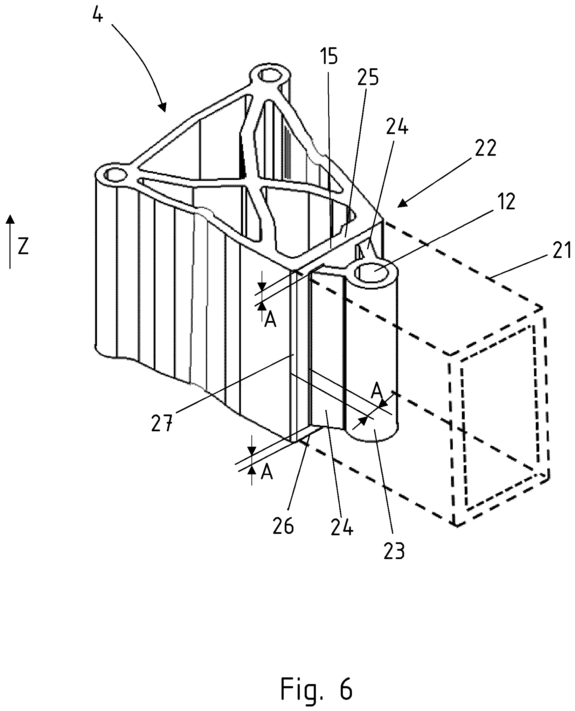

Die Figur 6 zeigt, wie die Crashbox 4 mit einen Längsträger 21 des Kraftfahrzeugs, welcher hier in gestrichelten Linien abschnittsweise gekennzeichnet ist, gekoppelt sein kann. Erfindungsgemäß weist die Crashbox 4 auf ihrem vom Querträger 2 abgewandten Ende 22 den zweiten Kopplungskanal 12 auf. Der Kopplungskanal 12 ist innerhalb einer Hülse 23 ausgebildet, wobei die Hülse 23 mittels zwei Stegen 24 mit der Crashbox 4 verbunden ist. Die Hülse 23 ist ebenfalls durch die Extrusion der Crashbox 4 ausgebildet. Ein hier nicht näher dargestelltes Kopplungsmittel 13 durchgreift den Kopplungskanal 12 und verbindet die Crashbox 4 mit dem Längsträger 21. Die Crashbox 4 wird somit mit dem gleichen Kopplungsprinzip mit dem Querträger 2 und dem Längsträger 21 verbunden.

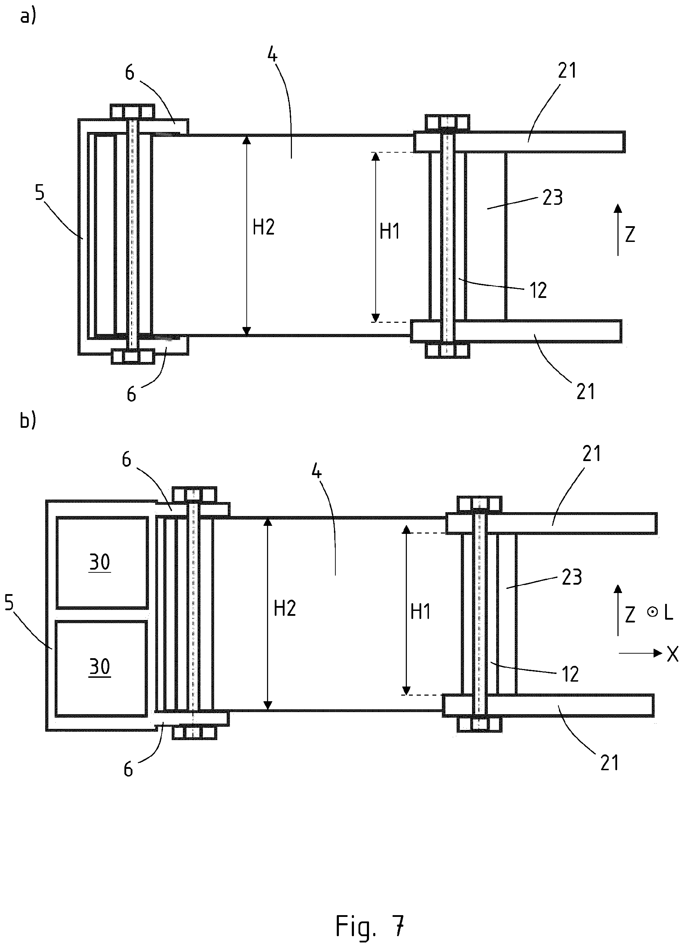

Der Figur 6 ist weiterhin zu entnehmen, dass zwischen der Oberkante 25 und Unterkante 26 der mit der Hülse 23 gekoppelten Außenwände15 und den Stegen 24 bzw. der Hülse 23 jeweils ein Abstand A ausgebildet ist. Mithin ist die Höhe des Kopplungskanals 12 bzw. der Hülse 23 in Kraftfahrzeugvertikalrichtung Z kleiner als die Höhe der Crashbox 4 in Kraftfahrzeugvertikalrichtung Z. Dies ist in der Figur 7 auch nochmal deutlich gezeigt. Der jeweilige Abstand A ist durch einen Materialabtrag nach der Extrusion der Crashbox 4 erzeugt. Auch zwischen den Seitenkanten 27 der Außenwand 15 und den Stegen 24 ist ein Abstand A ausgebildet. Die Ausbildung entsprechender Abstände A ermöglicht es, dass der Längsträger 21 vollumfänglich mit der Crashbox 4 in Kontakt steht. Dies stellt eine optimale Kraftübertragung zwischen Crashbox 4 und Längsträger 21 sicher.

Die zwischen der Hülse 23 und der Außenwand 15 angeordneten Stege 24 sorgen zudem dafür, dass die Kopplung zwischen Längsträger 21 und der Crashbox 4 nicht direkt am äußersten Ende des Längsträgers 21 erfolgt. Durch die Stege 24 wird der Abstand zwischen der Hülse 23 und dem vom Querträger abgewandten Ende 22 der Crashbox 4 erhöht.

Die Figur 7 zeigt die Kopplung der Crashbox 4 mit dem Querträger 2 und dem Längsträger 21 in einem Querschnitt des Querträgers 2. Die Crashbox 4 ist jeweils zwischen dem Querträger 2 und dem Längsträger 21 angeordnet. Figur 7 verdeutlicht, dass die Höhe H1 des Kopplungskanals 12 bzw. der Hülse 23 in Kraftfahrzeugvertikalrichtung Z kleiner als die Höhe H2 der Crashbox 4 in Kraftfahrzeugvertikalrichtung Z. Somit kann der Längsträger 21 direkt an der Crashbox 4 anliegen. Es wird ein für den Crashfall vorteilhafter Lastpfad ausgebildet.

Die in Figur 7a dargestellten Ausführungsvariante zeigt den Querschnitt B-B durch den Koppelbereich des Querträgers 2 gemäß Figur 5a, wobei der Querträger 2 hier mit der Crashbox 4 und dem Längsträger 21 gekoppelt ist. Die Crashbox 4 ist direkt zwischen den Schenkeln 6 des Querträgers 2 angeordnet und steht mit dem Steg 5 des Querträgers 2 in Kontakt. Die Abdeckung 28 des Querträgers 2 ist, wie auch in Figur 5a gezeigt, für die Anordnung der Crashboxen 4 zwischen den Schenkeln 6 im Kopplungsbereich zwischen Querträger 2 und Crashbox 4 ausgespart. Alternativ kann der in Figur 7a gezeigte Querträger 2 aber auch ein durchgehendes U-förmiges bzw. C-förmiges Profil im Querschnitt aufweisen.

Die Figure 7b zeigt eine alternative Ausführungsform des Querträgers 2. Dieser weist entlang seiner Längsrichtung L ein extrudiertes Zweikammerhohlprofil mit zwei Hohlprofilkammern 30 auf. Die Schenkel 6 des Querträgers 2 erstrecken sich über das Zweikammerhohlprofil in Kraftfahrzeuglängsrichtung X. Die Crashbox 4 ist zwischen den sich in Kraftfahrzeuglängsrichtung X erstreckenden Schenkeln 6 des Querträgers 2 angeordnet. Die überstehenden Bereiche der Schenkel 6 sind insbesondere nur in den zwei Koppelbereichen zwischen dem Querträger 2 und den Crashboxen 4 ausgebildet.

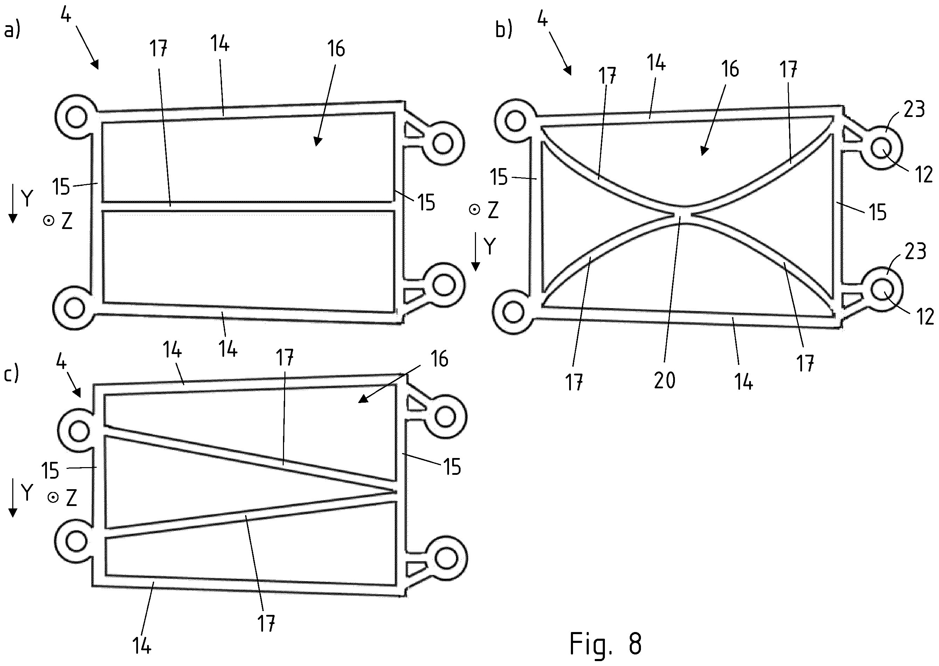

Die Figur 8 zeigt unterschiedliche alternative Ausgestaltungsvarianten des Deformationsbereichs 16 der Crashbox 4 in einer Draufsicht. Die in der Figur 8a gezeigte Crashbox 4 weist lediglich eine Innenwand 17 im Deformationsbereich 16 auf. Diese erstreckt sich mittig zwischen den in Kraftfahrzeugquerrichtung Y orientierten Außenwänden 15 der Crashbox 4.

Das Deformationsprofil 16 der in der Figur 8b gezeigten Crashbox 4 weist ein X-förmiges Profil auf. Hier sind die einzelnen Innenwände 17 bogenförmig ausgebildet und erstrecken sich jeweils viertelkreisförmig von dem jeweiligen Eckbereich zwischen den Außenwänden 14, 15 zur Mitte des Deformationsbereichs 16 hin, wo sich die einzelnen Innenwände 17 in einem Verbindungspunkt 20 treffen.

Die Figur 8c zeigt eine weitere Ausgestaltungsvariante des Deformationsbereichs 16. Dieser wird durch zwei Innenwände 17 ausgebildet, wobei sich die Innenwände 17 jeweils von einem äußeren Bereich, der zum Querträger 2 orientierten Außenwand 15 hin zu einem mittleren Bereich, der vom Querträger 2 weiter beabstandeten Außenwand 15 hin erstrecken. Die Innenwände 17 und die zum Querträger 2 orientierte Außenwand 15 schließen somit einen dreieckförmigen Hohlraum ein. Insgesamt besteht der Deformationsbereich 16, in dem in Figur 8c gezeigten Ausführungsbeispiel, aus drei Hohlkammern.

Die Figur 8 verdeutlicht weiterhin, dass die Crashbox 4 auch zwei in Kraftfahrzeugvertikalrichtung Z verlaufende Kopplungskanäle 12 zur Verbindung der Crashbox 4 mit dem Längsträger 21 des Kraftfahrzeugs an ihrem vom Querträger 2 abgewandten Ende 22 aufweisen kann.

Figur 9 zeigt die erfindungsgemäße Stoßfängeranordnung 1 in einem deformierten Zustand in einer Draufsicht. Die Figur 9 veranschaulicht das Deformationsverhalten der Crashbox 4. Die in Kraftfahrzeuglängsrichtung X orientierten Außenwände 14 werden im Bereich ihrer Sicken 19 ins Innere der Crashbox 4 verlagert, sodass an die Crashbox 4 angrenzende Bauteile des Kraftfahrzeugs nicht beschädigt werden. Die Innenwände 17 der Crashbox 4 knicken im Bereich ihrer Abwinklungen 18 ein. Aufgrund der gleichsinnigen Ausstellung der Abwinklungen 18 werden die Innenwände 17 auch gleichsinnig verformt, sodass sich die Innenwände 17 nicht gegenseitig behindern und eine optimale Umwandlung von Bewegungsenergie in Deformationsenergie gewährleistet ist. Zudem ist sichergestellt, dass die Innenwände 17 die Verlagerung der Außenwände 14 ins Innere der Crashbox 4 ermöglichen.

### Bezugszeichen:

- 1 -: Stoßfängeranordnung
- 2 -: Querträger
- 3 -: Ende
- 4 -: Crashbox
- 5 -: Steg
- 6 -: Schenkel
- 7 -: Flansch
- 8 -: Sicke
- 9 -: Flansch
- 10 -: Kopplungskanal
- 11 -: Kopplungskanal
- 12 -: Kopplungskanal
- 13 -: Kopplungsmittel
- 14 -: Außenwand
- 15 -: Außenwand
- 16 -: Deformationsbereich
- 17 -: Innenwand
- 18 -: Abwinklung
- 19 -: Sicke
- 20 -: Verbindungspunkt
- 21 -: Längsträger
- 22 -: abgewandtes Ende zu 2
- 23 -: Hülse
- 24 -: Steg
- 25 -: Oberkante
- 26 -: Unterkante
- 27 -: Seitenkante
- 28 -: Abdeckung
- 29 -: Trennsteg
- 30 -: Hohlprofilkammer
- A -: Abstand
- B -: Breite
- H1 -: Höhe
- H2 -: Höhe

- L -: Längsrichtung
- X -: Kraftfahrzeuglängsrichtung
- Y -: Kraftfahrzeugquerrichtung
- Z -: Kraftfahrzeugvertikalrichtung

## Patentansprüche

1. Stoßfängeranordnung (1) für ein Kraftfahrzeug aufweisend einen Querträger (2) sowie jeweils eine im Bereich der Enden (3) des Querträgers (2) angeordnete Crashbox (4) zur Kopplung der Stoßfängeranordnung (1) mit einem Längsträger (21) des Kraftfahrzeugs, wobei die Crashbox (4) ein in Kraftfahrzeugvertikalrichtung (Z) extrudiertes Profil aufweist, **dadurch gekennzeichnet, dass** die Crashbox (4) einen ersten in Kraftfahrzeugvertikalrichtung (Z) verlaufenden Kopplungskanal (10, 11) aufweist, wobei ein Kopplungsmittel (13) wenigstens abschnittsweise in den ersten Kopplungskanal (10, 11) eingreift und die Crashbox (4) mit dem Querträger (2) verbindet, wobei die Crashbox (4) an ihrem vom Querträger (2) abgewandten Ende (22) einen zweiten in Kraftfahrzeugvertikalrichtung (Z) verlaufenden Kopplungskanal (12) zur Verbindung der Crashbox (4) mit dem Längsträger (21) aufweist.

2. Stoßfängeranordnung (1) nach Anspruch 1, **dadurch gekennzeichnet, dass** der Querträger (2) einen Steg (5) und zwei gegenüberliegende Schenkel (6) aufweist, wobei der Querträger (2) im Querschnitt zumindest abschnittsweise hutförmig oder U-förmig ausgebildet ist.

3. Stoßfängeranordnung (1) nach Anspruch 1 oder 2, **dadurch gekennzeichnet, dass** der Querträger (2) aus einem im Kraftfahrzeugquerrichtung (Y) extrudierten Strangpressprofil ausgebildet ist.

4. Stoßfängeranordnung (1) nach einem der Ansprüche 1 bis 3, **dadurch gekennzeichnet, dass** der Querträger (2) entlang seiner Längsrichtung (L) und insbesondere zwischen seinen Endbereichen (3) ein Mehrkammerhohlprofil, bevorzugt ein Zweikammerhohlprofil aufweist.

5. Stoßfängeranordnung (1) nach einem der Ansprüche 2 bis 4, **dadurch gekennzeichnet, dass** der Steg (5) eine sich in Längsrichtung (L) des Stegs (5) erstreckende Sicke (8) aufweist.

6. Stoßfängeranordnung (1) nach einem der Ansprüche 2 bis 5, **dadurch gekennzeichnet, dass** die Crashbox (4) abschnittsweise zwischen den gegenüberliegenden Schenkeln (6) angeordnet ist und mit dem Steg (5) und/oder der Sicke (8) des Stegs (5) in Kontakt steht.

7. Stoßfängeranordnung (1) nach einem der Ansprüche 1 bis 6, **dadurch** g**ekennzeichnet**, dass die Crashbox (4) in Kraftfahrzeuglängsrichtung (X) einen trapezförmigen Verlauf aufweist, wobei insbesondere die Breite (B) der Crashbox (4) zum Querträger (2) hin zunimmt.

8. Stoßfängeranordnung (1) nach einem der Ansprüche 1 bis 7, **dadurch gekennzeichnet, dass** die Crashbox (4) vier Außenwände (14, 15) aufweist, die einen Deformationsbereich (16) einschließend, wobei der Deformationsbereich (16) aus Innenwänden (17) ausgebildet ist und die Innenwände (17) von der Kraftfahrzeugvertikalrichtung (Z) aus betrachtet X-förmig angeordnet sind.

9. Stoßfängeranordnung (1) nach Anspruch 8, **dadurch gekennzeichnet, dass** die X-förmig angeordneten Innenwände (17) jeweils wenigstens eine in Kraftfahrzeugvertikalrichtung (Z) verlaufende Sicke oder Abwinklung (18) aufweisen.

10. Stoßfängeranordnung (1) nach einem der Ansprüche 1 bis 9, **dadurch gekennzeichnet, dass** wenigstens eine der in Kraftfahrzeuglängsrichtung (X) orientierten Außenwände (14) eine in Kraftfahrzeugvertikalrichtung (Z) verlaufende Sicke (19) und/oder Kerbe aufweist.

11. Stoßfängeranordnung (1) nach einem der Ansprüche 1 bis 10, **dadurch gekennzeichnet, dass** der erste Kopplungskanal (10, 11) durch die Extrusion der Crashbox (4) ausgebildet ist oder in die Crashbox (4) gebohrt ist oder innerhalb einer Hülse (23) ausgebildet ist, wobei die Hülse (23) durch die Extrusion der Crashbox (4) ausgebildet ist.

12. Stoßfängeranordnung (1) nach einem der Ansprüche 2 bis 11, **dadurch gekennzeichnet, dass** das Kopplungsmittel (13) die gegenüberliegenden Schenkel (6) des Querträgers (2) durchgreift oder unmittelbar mit diesen gefügt ist, wobei das Kopplungsmittel (13) ein Bolzen, ein Stift, eine Gewindestange oder eine Schraube ist.

13. Stoßfängeranordnung (1) nach einem der Ansprüche 1 bis 12, **dadurch gekennzeichnet, dass** der zweite Kopplungskanal (12) innerhalb einer Hülse (23) ausgebildet ist, wobei die Hülse (23) mittels eines Stegs (24) mit der Crashbox (4) verbunden ist.

14. Stoßfängeranordnung (1) nach einem der Ansprüche 1 bis 13, **dadurch gekennzeichnet, dass** die Höhe (H1) des zweiten Kopplungskanals (12) in Kraftfahrzeugvertikalrichtung (Z) geringer ist als die Höhe (H2) der Crashbox (4) in Kraftfahrzeugvertikalrichtung (Z).

## Geänderte Patentansprüche

### Geänderte Patentansprüche gemäss Regel 137(2) EPÜ.

1. Stoßfängeranordnung (1) für ein Kraftfahrzeug aufweisend einen Querträger (2) sowie jeweils eine im Bereich der Enden (3) des Querträgers (2) angeordnete Crashbox (4) zur Kopplung der Stoßfängeranordnung (1) mit einem Längsträger (21) des Kraftfahrzeugs, wobei die Crashbox (4) einen ersten in Kraftfahrzeugvertikalrichtung (Z) verlaufenden Kopplungskanal (10, 11) aufweist, wobei ein Kopplungsmittel (13) wenigstens abschnittsweise in den ersten Kopplungskanal (10, 11) eingreift und die Crashbox (4) mit dem Querträger (2) verbindet, **dadurch gekennzeichnet, dass** die Crashbox (4) an ihrem vom Querträger (2) abgewandten Ende (22) einen zweiten in Kraftfahrzeugvertikalrichtung (Z) verlaufenden Kopplungskanal (12) zur Verbindung der Crashbox (4) mit dem Längsträger (21) aufweist, wobei die Crashbox (4) ein in Kraftfahrzeugvertikalrichtung (Z) extrudiertes Profil aufweist und die Kopplungskanäle (10, 11, 12) durch die Extrusion der Crashbox (4) ausgebildet sind oder als Vollmaterial in Form von runden oder mehreckigen Vollmaterialabschnitten in der Crashbox (4) mitextrudiert und durch Durchbohren und/oder längenabschnittsweises Gewindeschneiden ausgebildet sind.

2. Stoßfängeranordnung (1) nach Anspruch 1, **dadurch gekennzeichnet, dass** der Querträger (2) einen Steg (5) und zwei gegenüberliegende Schenkel (6) aufweist, wobei der Querträger (2) im Querschnitt zumindest abschnittsweise hutförmig oder U-förmig ausgebildet ist.

3. Stoßfängeranordnung (1) nach Anspruch 1 oder 2, **dadurch gekennzeichnet, dass** der Querträger (2) aus einem im Kraftfahrzeugquerrichtung (Y) extrudierten Strangpressprofil ausgebildet ist.

4. Stoßfängeranordnung (1) nach einem der Ansprüche 1 bis 3, **dadurch gekennzeichnet, dass** der Querträger (2) entlang seiner Längsrichtung (L) und insbesondere zwischen seinen Endbereichen (3) ein Mehrkammerhohlprofil, bevorzugt ein Zweikammerhohlprofil aufweist.

5. Stoßfängeranordnung (1) nach einem der Ansprüche 2 bis 4, **dadurch gekennzeichnet, dass** der Steg (5) eine sich in Längsrichtung (L) des Stegs (5) erstreckende Sicke (8) aufweist.

6. Stoßfängeranordnung (1) nach einem der Ansprüche 2 bis 5, **dadurch gekennzeichnet, dass** die Crashbox (4) abschnittsweise zwischen den gegenüberliegenden Schenkeln (6) angeordnet ist und mit dem Steg (5) und/oder der Sicke (8) des Stegs (5) in Kontakt steht.

7. Stoßfängeranordnung (1) nach einem der Ansprüche 1 bis 6, **dadurch gekennzeichnet, dass** die Crashbox (4) in Kraftfahrzeuglängsrichtung (X) einen trapezförmigen Verlauf aufweist, wobei insbesondere die Breite (B) der Crashbox (4) zum Querträger (2) hin zunimmt.

8. Stoßfängeranordnung (1) nach einem der Ansprüche 1 bis 7, **dadurch gekennzeichnet, dass** die Crashbox (4) vier Außenwände (14, 15) aufweist, die einen Deformationsbereich (16) einschließend, wobei der Deformationsbereich (16) aus Innenwänden (17) ausgebildet ist und die Innenwände (17) von der Kraftfahrzeugvertikalrichtung (Z) aus betrachtet X-förmig angeordnet sind.

9. Stoßfängeranordnung (1) nach Anspruch 8, **dadurch gekennzeichnet, dass** die X-förmig angeordneten Innenwände (17) jeweils wenigstens eine in Kraftfahrzeugvertikalrichtung (Z) verlaufende Sicke oder Abwinklung (18) aufweisen.

10. Stoßfängeranordnung (1) nach einem der Ansprüche 1 bis 9, **dadurch gekennzeichnet, dass** wenigstens eine der in Kraftfahrzeuglängsrichtung (X) orientierten Außenwände (14) eine in Kraftfahrzeugvertikalrichtung (Z) verlaufende Sicke (19) und/oder Kerbe aufweist.

11. Stoßfängeranordnung (1) nach einem der Ansprüche 1 bis 10, **dadurch gekennzeichnet, dass** der erste Kopplungskanal (10, 11) innerhalb einer Hülse (23) ausgebildet ist, wobei die Hülse (23) durch die Extrusion der Crashbox (4) ausgebildet ist.

12. Stoßfängeranordnung (1) nach einem der Ansprüche 2 bis 11, **dadurch gekennzeichnet, dass** das Kopplungsmittel (13) die gegenüberliegenden Schenkel (6) des Querträgers (2) durchgreift oder unmittelbar mit diesen gefügt ist, wobei das Kopplungsmittel (13) ein Bolzen, ein Stift, eine Gewindestange oder eine Schraube ist.

13. Stoßfängeranordnung (1) nach einem der Ansprüche 1 bis 12, **dadurch gekennzeichnet, dass** der zweite Kopplungskanal (12) innerhalb einer Hülse (23) ausgebildet ist, wobei die Hülse (23) mittels eines Stegs (24) mit der Crashbox (4) verbunden ist.

14. Stoßfängeranordnung (1) nach einem der Ansprüche 1 bis 13, **dadurch gekennzeichnet, dass** die Höhe (H1) des zweiten Kopplungskanals (12) in Kraftfahrzeugvertikalrichtung (Z) geringer ist als die Höhe (H2) der Crashbox (4) in Kraftfahrzeugvertikalrichtung (Z).
